# EUROPEAN PATENT SPECIFICATION

(11) **EP 0 704 388 B1**
(45) Date of publication and mention of the grant of the patent: **08.08.2001**
(21) Application number: 95115399.8
(22) Date of filing: 29.09.1995
(51) Int. Cl.: B65G 1/00, B65G 21/18

(54) **Continuous chain conveyor belt for transporting light objects, provided with a single propulsor acting on several points**
Endloses Kettenförderband zum Transportieren von leichten Gegenständen, mit einem einzigen Antrieb, einwirkend auf mehrere Stellen
Convoyeur à chaîne sans fin, pour le transport d'objets légers, pourvu d'un entraînement unique agissant en plusieurs endroits

(30) Priority: 30.09.1994 IT PD940165
(43) Date of publication of application: 03.04.1996
(73) Proprietor: Graziani, Stefano, 36060 Romano d'Ezzelino (IT)
(72) Inventor: Graziani, Stefano, 36060 Romano d'Ezzelino (IT)
(74) Representative: Gustorf, Gerhard, Dipl.-Ing.

(56) References cited:
- EP-A- 0 544 085
- EP-A- 0 595 618
- US-A- 3 174 617
- US-A- 3 392 819

## Description

The present invention relates to a chain conveyor as set forth in the preamble of claim 1.

This kind of conveyors may be used particularly for the transport of light objects, e.g. in food processing systems for handling fresh pasta along various working stations.

The known conveyors comprise two link chains arranged parallel to each other and joined by rods that are perpendicular to the chain axis and are generally parallel to one another. The objects to be transported are placed on the rods, which are perpendicular to the motion of the conveyor.

Said conveyors have the following drawbacks:
- the chains create considerable problems, since they slide on seats that do not maintain the necessary tension and their drive requires the use of specially shaped gear wheels;
- when the conveyor bends sideward, it deforms, thus increasing the distance between the rods on the external edge of the bend, which makes it necessary to insert other components like iron spirals, rings and so on between said rods; this increases construction and maintenance costs and makes operation quite difficult;
- if it is necessary to replace a link of the conveyor or a rod, the links must be opened and rewelded, which may result in the breakage of the chain in that point or in damages to the chain sliding seats due to imperfect welding.

From US-A 3 392 819 a chain conveyor is known that has the features indicated in the preamble of claim 1. However, in this known conveyor the joining means are the ends of the rods such that the second type chain links do not support their own load carrying rods.

It is an object of the present invention to eliminate the above mentioned drawbacks.

According to the invention, this problem is solved by the features of the characterising part of claim 1.

The new conveyor comprises rods that are parallel to one another and perpendicular to the drive direction, where the ends of each rod are fixed on connection elements that make up the chain itself.

Said connection elements have the shape of a vertical lamina, each of them is fixed to the end of one or two rods and they are provided with upper and/or lower recesses for the chain drive and with front and rear bores or slots.

The connection elements with bores are coupled in pairs by means of pins positioned in the bores, so that the two connection elements are integral with each other and that the space between them is greater than the thickness of the connection elements provided with slots; each connection element with slots is interposed at the front and at the rear of two different pairs of elements with bores, so that the union pin of the elements with bore can slide inside the slot.

The thus constructed conveyor can rotate on the vertical plane to go up or down, can rotate on the horizontal plane to bend sideward and slides without problems in both metal and self-lubricating plastic channels. The relative distance between the rods varies depending on the slots of the connection elements.

In the bend sections with horizontal component (plane or helicoidal) the side surface of the chain section that slides on the inner side of the bend rests on a series of idle balls or rollers, which allow the chain to slide with the minimum friction.

The conveyor belts used at present are are rather long and must be set in motion by several motors positioned on several points of the course.

The use of several propulsors arranged on several points involves a series of problems, the first of which regards the adjustment of the advance speed.

In fact, each motor has an advance speed slightly different from that of the others and generates stresses on the belt, on the belt guides and on the other motors.

All this results in abnormal wear of all the components of the conveyor belt, with risk of breakages.

The attempt of synchronizing the advance speed of the various motors often requires the use of expensive equipment which isn't always up to its function.

Further, it is important to consider that either sudden changes of temperature and the masses of the objects transported by the conveyor belt produce stresses on the bearing structure of the conveyor belt and particularly on its guides, which can lead to deformation or breakage of the guides or of parts of the structure .

In order to eliminate the above-mentioned drawbacks a new propulsor unit, which acts on several parts of the conveyor route at the same time, has been designed and implemented.

Substantially, a proper propulsor unit sets in rotation a vertical drive shaft positioned in the point where more sections of the conveyor are side by side or overlapping.

Motion is then transmitted to the several points of the conveyor by proper series of gears having identical gear ratios, with equal or different sense of rotation.

The propulsor unit comprises a motor with power suitable to set in motion the whole conveyor; said propulsor unit transmits rotation to a vertical drive shaft. An ancillary shaft can be provided in connection with said single drive shaft, in order to limit torsional stresses.

The length of the drive shaft is such that it reaches all the side-by-side or overlapping sections of the conveyor belt; the drive shaft is positioned near the conveyor, in such a point that it passes near the various side-by-side or overlapping sections of the course.

A series of gear wheels is positioned along the drive shaft, in correspondence with the points where the conveyor passes near the drive shaft itself.

Each series of gear wheels is connected with proper gear wheels, or another suitable mechanism, resting on the links of the conveyor.

Practically, the motion of the propulsor unit is transmitted to several points of the conveyor belt with the same number of revolutions and therefore the same speed.

The transmission of motion from the drive shaft to the conveyor links takes place through bevel gear pairs, where each bevel gear pair controls a gear wheel or an analogous device acting on the links of the conveyor.

By reversing the position of the bevel gear of the drive shaft with respect to the gear wheel that transmits motion to the links, the advance of the conveyor in the opposite direction is obtained.

Therefore, with a single shaft and a single type of bevel gear it is possible to transmit motion to the belt in more points, in one or the other direction.

Further, since the conveyor links are provided with identical seats, the gear can transmit motion acting both under and above the link, both on the right and reverse side (return phase) of the belt.

To absorb the structural expansions and those due to the stresses of the objects transported by the belt, the helicoidal course of the guides presents some interruptions, preferably one per turn, in which the guide ends are apart, so that the expansions axial to the travelling direction of the conveyor can be absorbed. Further, some guide sections are not integral with the bearing structure, but, through elastic elements, they can perform side shifts without transmitting stresses to the bearing structure.

In particular, the guides are provided with holes and/or slots inside which fixed studs integral with the frame are positioned; the guides can thus travel in both directions.

Said holes or slots are obtained on the guides in order to ensure the stability of the guides and the greatest compactness of the system.

If the guide heads are too near or too far, with the risk of breaking the chain, some sensors positioned near the heads stop the conveyor belt.

In this way several drawbacks of the known conveyor belts with helicoidal course are eliminated: it is neither necessary to service several electric motors, nor to control the advance speed of the various motors periodically, there are no problems regarding the stresses on the various parts of the conveyor due to differences in the advance, thermal expansions and the expansions due to the masses of the transported objects are not transmitted to the bearing structure, thus preventing breakages and permanent expansions.

The guides are mounted on studs, so that they can slide on said studs, and thanks to said elastic mechanisms they maintain their right position, even if there are slight shifts due to stresses and expansions.

Each movable stud connecting the links can be lined by a tube (made of metal or plastic) having the same length or by two or more shorter tubes, which can hold a possible net in its position and reduce friction between the guide and the movable stud.

The following is just an example among many of the practical applications of the invention in question, illustrated in the attached drawings.
Fig. 1 illustrates the first type of chain links,
Fig. 2 illustrates the second type of chain links,
Fig. 3 is a schematic side view of the chain in two different positions,
Fig. 4 is a plan view of fig. 3,
Fig. 5 shows a curved section of a part of the conveyor,
Fig. 6 shows a possible configuration of the chain conveyor having a helical part,
Fig. 7 illustrates the propulsor unit for the conveyor,
Fig. 8 shows a detail of Fig. 7 in two different positions,
Fig. 9 illustrates the guide means for guiding the chain links.

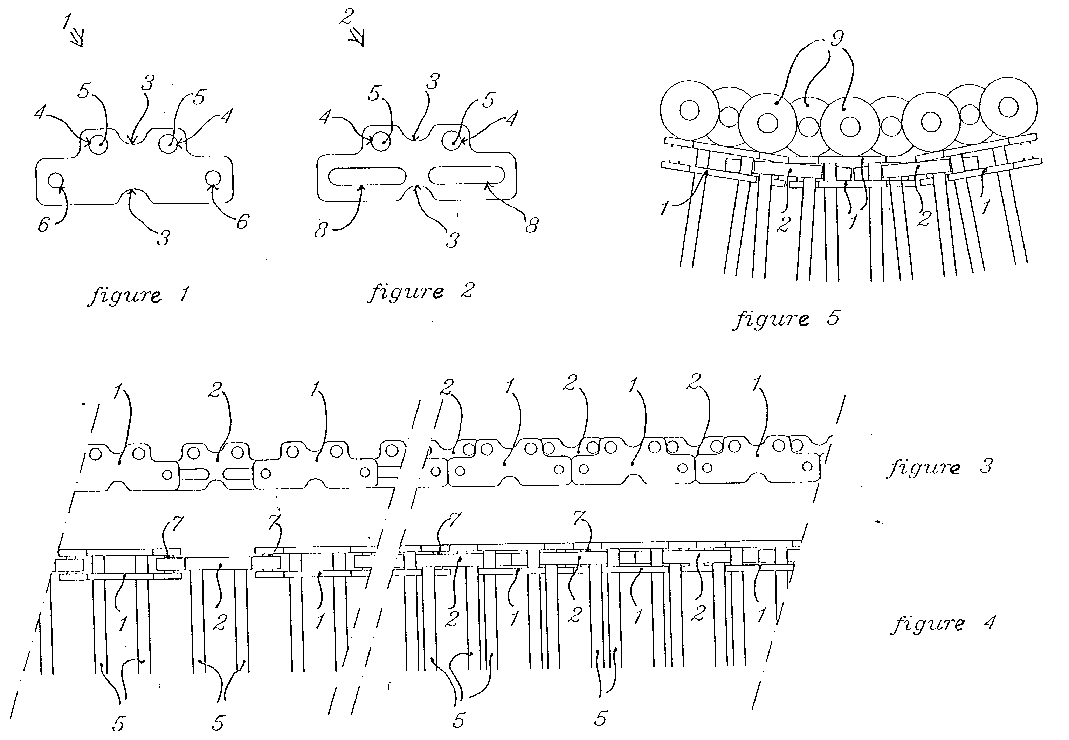

Figure 1 illustrates the first type of chain links comprising, as may be seen in figure 4, a pair of vertical, lamina-form connection elements 1 having bores 6 for pins 7 joining together the two elements 1 a given distance apart.

Successive pairs of the first type of chain links are joined together by a second type of chain links illustrated in figure 2 and comprising a single lamina-form connection element 2 positioned between two connection elements 1 of the first type. Two slots 8 are formed in each of the second type connection elements 2 for the sliding engagement of joining pins 7 provided in the first type connection elements 1.

Both types of connection elements 1, 2 illustrated in figures 1 and 2 are provided with upper and lower recesses 3 for the engagement of drive means and with bores 4 for the engagement of the ends of horizontal rods 5 which serve as load carrying elements.

Figure 3 is a schematic side view of the assembly sequence of the plane connection elements 1, 2 in the two positions of maximum and minimum distance.

Figur 4 is a plan view of the conveyor in which the plane connection elements 1, 2, the joining pins 7 and the rods 5 can be clearly seen.

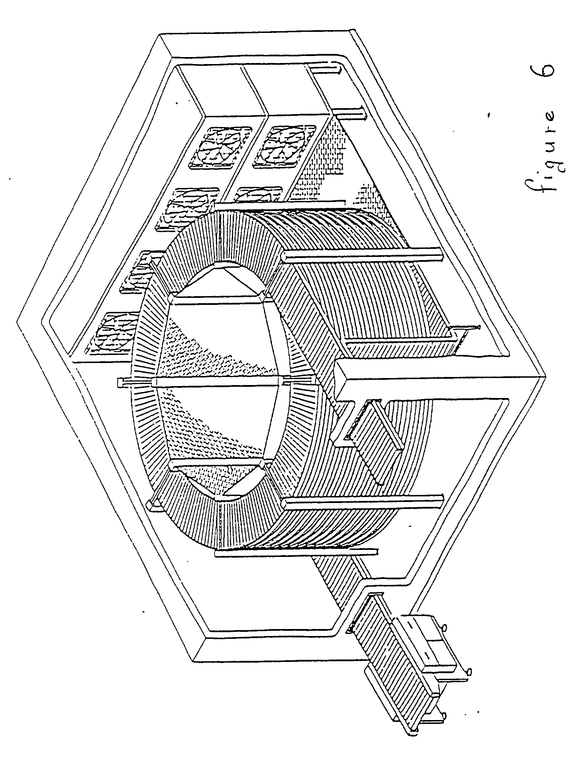

Figure 5 shows a curved section of the conveyor seen from above; rollers or balls 9 are positioned on the inner side of the bend in order to guide the connection elements 1, 2. The invention can be successfully applied particularly in plants where the conveyor belt follows a long helicoidal course, like that shown in Fig. 6, for example.

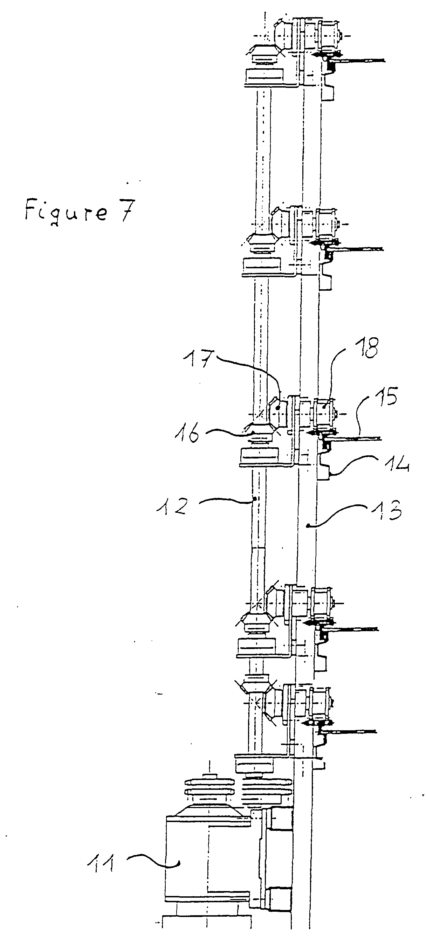

Figure 7 shows the driving unit comprising an electric motor 11 which sets in rotation a vertical drive shaft 12 preferably positioned near and parallel to a supporting structure 13 that supports guide means 14 of the link conveyor belt (15, as shown in figures 3, 4, 5).

On the drive shaft 12, in correspondence with several points near the guides 14, there are bevel gears 16 coupled with similar bevel gears 17, which in turn transmit motion to the links 15 of the conveyor.

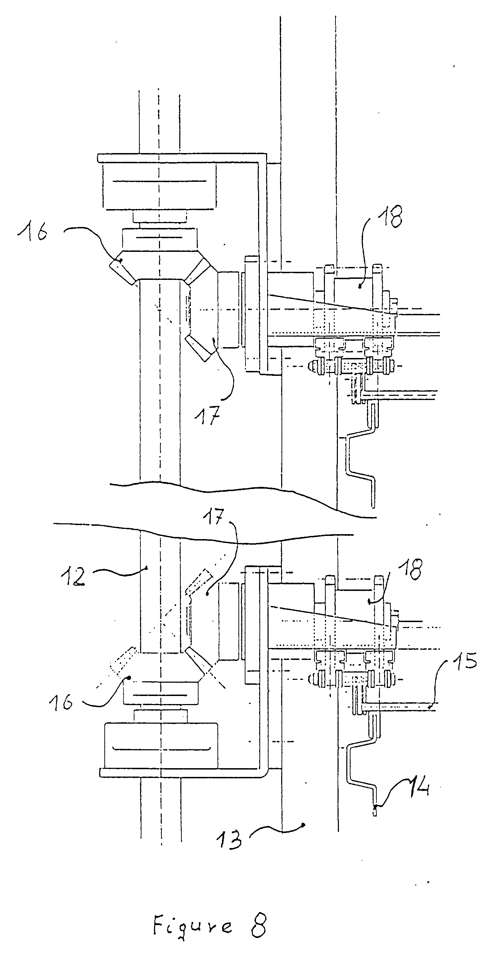

Figure 8 shows the transmission of motion from the drive shaft 12 to the links 15 of the conveyor in detail. Each bevel gear pair 16, 17 controls a gear wheel 18 or a similar device acting on the links 15 of the conveyor belt. In particular, it is sufficient to reverse the position of the bevel gear 16 of the drive shaft 12 and of the bevel gear 17, which then transmits motion to the links 15, to obtain the advance of the belt in the opposite direction with the same rotation sense of the drive shaft 12.

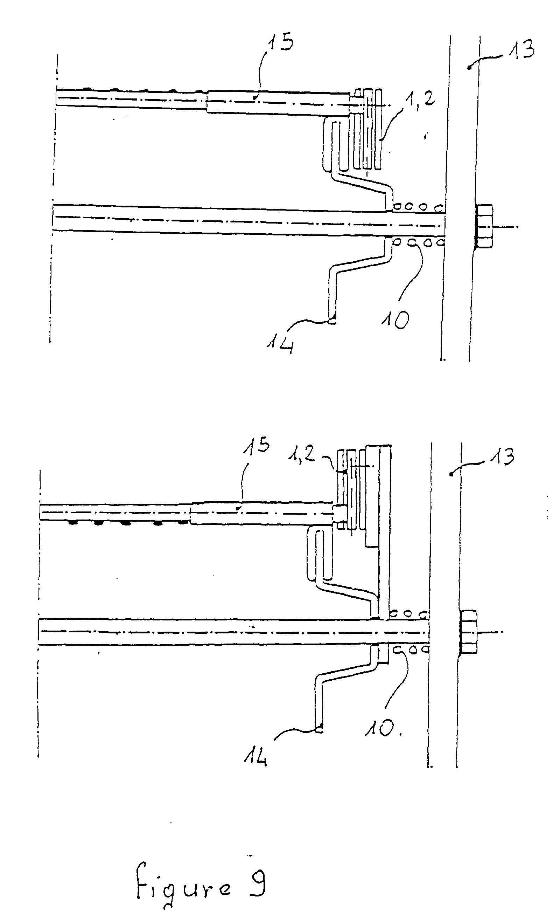

Figure 9 shows how, with the same guide 14 and the same links 15 of the conveyor belt, said links being provided with the relative connection elements 1, 2, it is possible to have the conveyor belt slide on its right side (image up) or reverse side (image down). It is also possible to see how the guide means 14 is elastically connected with the supporting structure 13 through springs 10 that absorb temporary thermal and dynamic expansions.

Figure 6 shows a possible configuration of the conveyor.

## Claims

1. Chain conveyor following a helical path and comprising a plurality of pairs of load carrying elements in the form of parallel horizontal rods (5), the two rods (5) in each pair being held parallel by a first type of chain link comprising a pair of vertical, lamina-form connection elements (1) of a first type located at each end of the rods (5), said connection elements (1) being joined together a given distance apart, successive pairs of said first type of chain link being joined together by a second type of chain link comprising a single lamina-form connection element (2) of a second type positioned between two connection elements (1) of the first type, two slots (8) being formed in each of the second type connection element (2) for the sliding engagement of joining means provided in the first type connection elements (1), characterised in that said joining means are in the form of pins (7) engaging opposing bores (6) in each pair of the first type of lamina-form elements (1), and that between each said pair of parallel rods (5) supported by said first type of chain links there is arranged a further pair of parallel horizontal rods (5), the ends of which engage opposing bores (4) in the lamina-form elements (2) of the second type of chain link.

2. Chain conveyor according to claim 1, wherein the lamina-form elements (1, 2) of the first and of the second type of chain links are provided with upper and/or lower recesses (3) for the engagement of drive means.

3. Chain conveyor according to claim 1 or 2, wherein the lateral distance between two lamina-form elements (1) of the first type of chain link is greater than the thickness of the second type lamina-form element (2).

4. Chain conveyor according to any of the preceding claims, wherein the chain conveyor comprises helical bent sections and on the inner edge of the helical bent sections a series of rollers or balls (9) is positioned forming an abutment for the adjacent first type of chain link.

5. Chain conveyor according to any of the preceding claims, comprising a single drive motor (11) driving a single vertical shaft (12) adjacent to one lateral side of the conveyor, at each point where the conveyor passes said shaft (12) a drive is taken off the shaft (12) via bevel gears (16, 17) driving the conveyor.

6. Chain conveyor according to claim 5, wherein with the same rotation sense of said shaft (12) the movement of the various conveyor sections in both senses is obtained at the same time by properly applying the bevel gears (16, 17) on the shaft (12).

7. Chain conveyor according to claim 6, wherein guide means (14) are provided supporting said horizontal rods (5) and guiding the conveyor chain links along their path, said guide means (14) being discontinously fastened to a conveyor supporting structure (13) through elastic elements (10).

8. Chain conveyor according to claim 7, wherein the guide means (14) are provided with bores or slots in which are mounted fixed supporting bars for said guide means (14), the elastic elements (10) being positioned between the guide means (14) and the supporting bars holding the guide means (14) in correct position and the conveyor under tension.

9. Chain conveyor according to any of the preceding claims wherein the transverse rods (5) rest on guide means (14) and are covered with a tubular layer (15) at least in the region of said guide means (14).

## Patentansprüche

1. Kettenförderer für einen schraubenförmigen Bahnverlauf und mit einer Mehrzahl von paarweise angeordneten Lastaufnahmeelementen in Form parallel angeordneter, horizontaler Stangen (5), wobei in jedem Paar die beiden Stangen (5) parallel zueinander gehalten werden durch einen ersten Typ eines Kettengliedes, bestehend aus einem Paar vertikaler, flacher Verbindungselemente (1), das an beiden Enden der Stangen (5) angeordnet ist, wobei die Verbindungselemente (1) des ersten Typs mit einem vorgegebenen Abstand zueinander verbunden sind und aufeinander folgende Paare des ersten Kettengliedtyps über einen zweiten Kettengliedtyp miteinander verbunden sind, der aus einem einzigen flachen Verbindungselement (2) besteht, das zwischen zwei Verbindungselemente (1) des ersten Types greift, wobei in jedes Verbindungselement (2) des zweiten Typs zwei Schlitze (8) für den verschiebbaren Eingriff von Koppelelementen des ersten Typs der Verbindungselemente (1) eingearbeitet sind, dadurch gekennzeichnet, daß die Koppelelemente Stifte (7) sind, die in einander gegenüberliegende Bohrungen (6) eines jeden Paares der Verbindungselemente (1) des ersten Typs eingreifen, und daß zwischen jedem Paar paralleler Stangen (5), die von den Kettengliedern des ersten Typs getragen sind, ein weiters Paar paralleler, horizontaler Stangen (5) angeordnet ist, deren Enden in einander gegenüberliegende Bohrungen (4) eingreifen, die an den flachen Verbindungselementen (2) des zweiten Typs ausgebildet sind.

2. Kettenförderer nach Anspruch 1, dadurch gekennzeichnet, daß in die flachen Verbindungselemente (1, 2) des ersten und des zweiten Typs der Kettenglieder obere und/oder untere Aussparungen (3) für den Eingriff von Antriebsmitteln eingearbeitet sind.

3. Kettenförderer nach Anspruch 1 oder 2, dadurch gekennzeichnet, daß der seitliche Abstand zwischen den beiden flachen Verbindungselementen (1) des ersten Typs des Kettengliedes größer als die Dicke des flachen Verbindungselementes (2) des zweiten Typs ist.

4. Kettenförderer nach einem der vorhergehenden Ansprüche, dadurch gekennzeichnet, daß der Kettenförderer schraubenförmig gekrümmte Abschnitte hat, an deren Innenseite eine Reihe von Rollen oder Kugeln (9) angeordnet ist, die als Anlage für den diesen gegenüberliegenden ersten Kettengliedtyp dient.

5. Kettenförderer nach einem der vorhergehenden Ansprüche mit einem einzigen Antriebsmotor (11), der eine einzige, vertikale Welle (12) antreibt, die einer ersten Seite des Förderers gegenüberliegt, wobei von jedem Punkt, an dem der Förderer die Welle (12) passiert, von dieser über Zahnräder (16, 17) ein Antrieb für den Förderer abgenommen ist.

6. Kettenförderer nach Anspruch 5, dadurch gekennzeichnet, daß mit ein und derselben Drehrichtung der Welle (12) die Bewegung der einzelnen Abschnitte des Förderers in beiden Richtungen gleichzeitig durch entsprechende Anordnung der Zahnräder (16, 17) auf der Welle (12) erreicht wird.

7. Kettenförderer nach Anspruch 6, gekennzeichnet durch Führungsmittel (14) zur Stützung der horizontalen Stangen (5) und zur Führung der Kettenglieder auf ihrer Bahn, wobei die e Führungsmittel (14) über elastische Elemente (10) diskontinuierlich an einer Tragstruktur des Förderers befestigt sind.

8. Kettenförderer nach Anspruch 7, dadurch gekennzeichnet, daß die Führungsmittel (14) Bohrungen oder Schlitze aufweisen, n denen feste Tragstangen für diese Führungsmittel (14) angebracht sind, wobei die elastischen Elemente (10) zwischen d n Führungsmitteln (14) und den Tragstangen angeordnet sind, welche die Führungsmittel (14) in exakter Position und den Förderer unter Spannung halten.

9. Kettenförderer nach einem der vorhergehenden Ansprüche, dadurch gekennzeichnet, daß sich die quer angeordneten Stangen (5) auf den Führungsmitteln (14) abstützen und wenigstens im Bereich der Führungsmittel (14) von einem schlauchförmigen Mantel (15) umhüllt sind.

## Revendications

1. Convoyeur à chaîne ayant une trajectoire en hélice et comprenant un nombre de paires d'éléments de suspension de la charge sous formé de barres horizontales parallèles (5), les deux barres (5) de chaque paire étant mantenues en position parallèle par un premier type de maillon comprenant une paire de raccords plats verticaux (1) positionnés aux deux extrémités des barres (5), lesdits raccords (1) du premier type étant reliés à une distance prédéfinie, deux paires successives du premier type de maillon étant reliées par un second type de maillon constitué d'un seul raccord plat (2) en prise entre deux raccords (1) du premier type, chaque raccord (2) du second type présentant deux fentes (8) pour l'engagement coulissant des éléments d'accouplement prévus dans les raccords (1) du premier type, caractérisé par le fait que lesdits éléments d'accouplement sont des chevilles (7) engageant des alésages opposés (6) pratiqués dans chaque paire des raccords (1) du premier type, et par le fait qu'entre chaque paire de barres parallèles (5) supportées par les maillon du premier type est postitionnée une autre paire de barres parallèles horizontales (5) dont les extrémités engagent des alésages opposés (4) pratiqués dans les raccords plats (2) du second type.

2. Convoyeur selon la revendication 1, caractérisé par le fait que dans les raccords plats (1, 2) du premier et du second type de maillons sont pratiqués des évidements supérieurs et/ou inférieurs pour la prise des moyens de propulsion.

3. Convoyeur selon la revendication 1 ou 2, caractérisé par le fait que la distance latérale entre les deux raccords plats (1) du premier type de maillon est plus grande de l'épaisseur du raccord plat (2) du second type.

4. Convoyeur selon une quelconque des revendications précédentes, caractérisé par le fait que ledit convoyeur à chaîne présente des sections en hélice, sur le côté intérieur desquelles est positionnée une série de roulettes ou billes (9) qui servent pour l'appui des maillons opposés du premier type.

5. Convoyeur selon une quelconque des revendications précédentes, comprenant un seul moteur de propulsion (11) qui commande un seul arbre vertical (12) adjacent à une face latérale dudit convoyeur, étant donné qu'à chaque point de l'arbre (12) devant lequel passe le convoyeur est fixé un moyen d'entraînement par engrenage conique (16, 17) qui fait avancer le convoyeur.

6. Convoyeur selon la revendication 5, caractérisé par le fait que le mouvement des sections du convoyeur dans les deux sens est obtenu simultanément par la même rotation de l'arbre (12) grâce à la particulière disposition des roues dentées (16, 17) sur l'arbre (12).

7. Convoyeur selon la revendication 6, caractérisé par des moyens de guidage (14) aptes au support des barres horizontales (5) et au guidage des maillons sur leur trajectoire, lesdits moyens (14) étant fixés de manière discontinue et par des éléments élastiques (10) à une structure portante dudit convoyeur.

8. Convoyeur selon la revendication 7, caractérisé par le fait que les moyens de guidage (14) présentent des alésages ou des fentes dans lesquelles sont montées des barres de support pour lesdits moyens de guidage (14), lesdits éléments élastiques (10) étant positionnés entre les moyens de guidage (14) et lesdites barres de support lesquelles mantiennent les moyens de support (14) dans la position exacte et font fonction de moyen de tension pour le convoyeur.

9. Convoyeur selon une quelconque des revendications précédentes, caractérisé par le fait que les barres transversales (5) s'appuyent sur les moyens de guidage (14) et sont enveloppées, au moins dans la zone des moyens de guidage (14), par une chemise tubulaire (15).
